# EUROPÄISCHE PATENTSCHRIFT

(11) **EP 1 254 799 B1**
(45) Veröffentlichungstag und Bekanntmachung des Hinweises auf die Patenterteilung: **27.06.2007**
(21) Anmeldenummer: 02008678.1
(22) Anmeldetag: 18.04.2002
(51) Int. Cl.: B60J 7/04, B60J 7/20, B60J 5/10, B60J 7/047

(54) **Öffnungsfähiges Fahrzeugdach**
Vehicle open roof
Toit ouvrant pour véhicule

(30) Priorität: 02.05.2001 DE 10121431
(43) Veröffentlichungstag der Anmeldung: 06.11.2002
(73) Patentinhaber: Webasto Vehicle Systems International GmbH, 82131 Stockdorf (DE)
(72) Erfinder: De Gaillard, Francois, 85390 Mouilleron en pareds (FR); Seifert, Wolfgang, 82110 Germering (DE)
(74) Vertreter: Konnerth, Dieter Hans

(56) Entgegenhaltungen:
- EP-A- 0 101 322
- EP-A- 0 989 009
- DE-A- 4 026 120
- GB-A- 2 188 595
- US-A- 2 782 070

## Beschreibung

Die vorliegende Erfindung betrifft ein öffnungsfähiges Fahrzeugdach mit mindestens einem Deckel gemäß dem in der EP 0101322 offenbarten Oberbegriff von Anspruch 1.

Aus der EP 0 989 009 A1 ist ein gattungsgemäßes Fahrzeugdach bekannt, bei welchem mehrere in Schließposition lamellenartig hintereinander liegende Deckel vorgesehen sind, die in einer dachfesten Führungsschiene in eine am hinteren Dachende liegende Deckelkassette einschiebbar sind, wobei sie in der Deckelkassette übereinanderliegend angeordnet sind. Nach Absenken der Heckscheibe in die Heckklappe ist es möglich, bei geschlossener Heckklappe die Deckelkassette mit den darin befindlichen Deckeln in den unteren Bereich der Heckklappe entlang seitlich in der Heckklappe vorgesehener Führungsschienen zu verschieben.

Aus der EP 0 989 008 A2 ist ein Fahrzeugdach bekannt, bei welchem mehrere in Schließstellung lamellenartig hintereinander liegende Deckel vorgesehen sind, die mittels einer fahrzeugfesten Führungsschiene nach hinten unten in eine Hecktür verschiebbar sind, welche um eine im wesentlichen vertikal verlaufende Schwenkachse seitlich mit den darin befindlichen Deckeln geöffnet werden kann.

Nachteilig bei diesen bekannten Fahrzeugdächern ist, dass insbesondere bei steiler Heckklappe die Übergabe der Deckel an die Heckklappe mechanisch problematisch ist und deshalb starke Beschränkungen in der Gestaltung der Verschiebemechanik bzw. der Deckelgröße auftreten.

Es ist Aufgabe der vorliegenden Erfindung, ein öffnungsfähiges Fahrzeugdach zu schaffen, das die platzsparende Ablage auch großer Deckel erlaubt und dennoch eine möglichst einfache Ausgestaltung der Deckelmechanik ermöglicht.

Diese Aufgabe wird erfindungsgemäß gelöst durch ein Fahrzeugdach, wie es in Anspruch 1 definiert ist. Bei dieser erfindungsgemäßen Lösung ist vorteilhaft, dass auf einfache Weise, insbesondere bei einfacher Ausgestaltung der Deckelmechanik, auch große Deckel, insbesondere Glasdeckel, in einer Weise abgelegt werden können, so daß weder der optische Eindruck des Fahrzeugs beeinträchtigt noch der Stauraum verringert wird.

Bevorzugte Ausgestaltungen der Erfindung ergeben sich aus den Unteransprüchen.

In einer einfachen Gestaltung ist die Führungsbahn der Heckklappe bezüglich der Heckklappe feststehend angeordnet. In diesem Fall kann ein in der Übergabestellung der Heckklappe zwischen den Enden der Führungsbahn der Heckklappe und der Dachführungsbahn bestehender Spalt von einem in der Dachführungsbahn oder in der Führungsbahn der Heckklappe geführten Schlitten mit Ausleger überbrückt werden.

Wenn alternativ die Führungsbahn der Heckklappe bezüglich der Heckklappe in Längsrichtung der Führungsbahn verschiebbar gebildet ist, kann die Führungsbahn in der Übergabestellung der Heckklappe mit ihrem oberen Ende an dem hinteren Ende der Dachführungsbahn anliegen.

Im folgenden wird die Erfindung anhand der beigefügten Zeichnungen beispielhaft näher erläutert. Dabei zeigen:
- Fig. 1: eine schematische Seitenansicht des Dach- und Heckbereichs eines Fahrzeugs mit einem erfindungsgemäßen Fahrzeugdach in einer ersten Ausführungsform, wobei die Heckklappe mit aufgenommenen Deckeln in drei unterschiedlichen Stellungen dargestellt ist;
- Fig. 2: eine vergrößerte Darstellung des Übergangsbereichs zur Heckklappe aus Fig. 1, wobei die Heckklappe in der Schließstellung dargestellt ist;
- Fig. 3: eine Ansicht wie Fig. 2, wobei die Heckklappe in der Übergabestellung dargestellt ist;
- Fig. 4: eine Ansicht wie Fig. 2, wobei die Heckklappe in der Öffnungsstellung dargestellt ist;
- Fign. 5 bis 7: Ansichten entsprechend Fign. 2 bis 4, wobei jedoch eine abgewandelte Ausführungsform der Heckklappe dargestellt ist;
- Fig. 8: in einer Seitenansicht gemäß Fig. 1 die Lagerung und den Antrieb der beiden Deckel;
- Fig. 9: in einer vergrößerten Seitenansicht einen Gleitschlitten in der Übergabestellung der Heckklappe;
- Fig. 10: in einer Seitenansicht den Übergangsbereich zur Heckklappe, wobei eine Führungsschiene der Heckklappe über ein Gelenk an der Führungsschiene des Fahrzeugdaches gelagert ist; und
- Fig. 11: in einer vergrößerten Darstellung da Gelenk der Fig. 10.

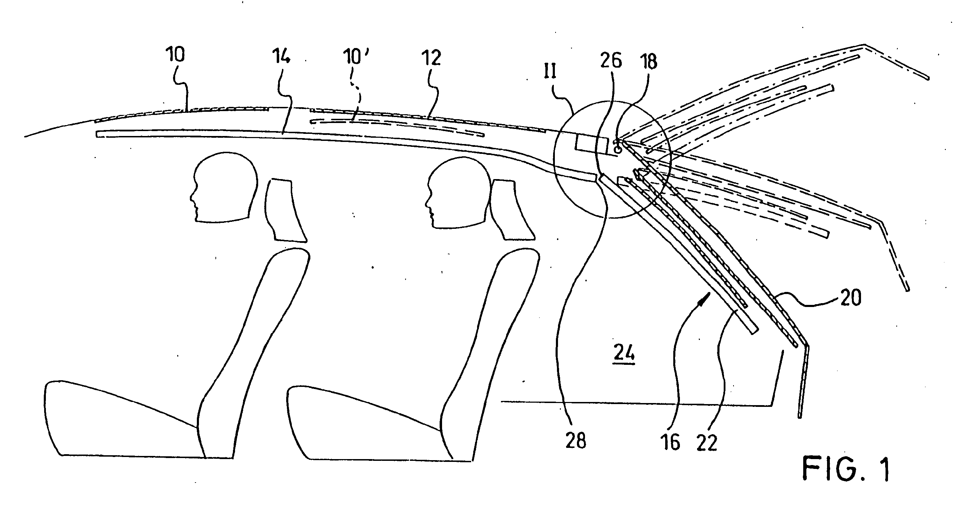

In Fig. 1 ist schematisch ein öffnungsfähiges Fahrzeugdach dargestellt, das zwei in Schließstellung in Fahrzeuglängsrichtung hintereinander angeordnete Deckel 10 und 12 umfasst, die in der gezeigten Schließstellung eine gemeinsame oder zwei separate Dachöffnungen verschließen. Die beiden Deckel 10 und 12 sind beidseits jeweils an einer Führungsbahn in einer seitlich angebrachten Dachführungsschiene 14 in Dachlängsrichtung verschiebbar geführt. Die Schienen 14 können beispielsweise in einen karosseriefesten Rahmen eingebaut sein oder mit Quertraversen miteinander verbunden sein. Alternativ können die Dachführungsschienen 14 absenkbar ausgebildet sein, um die Deckel 10 und 12 aus der gezeigten Schließstellung nach unten abzusenken.

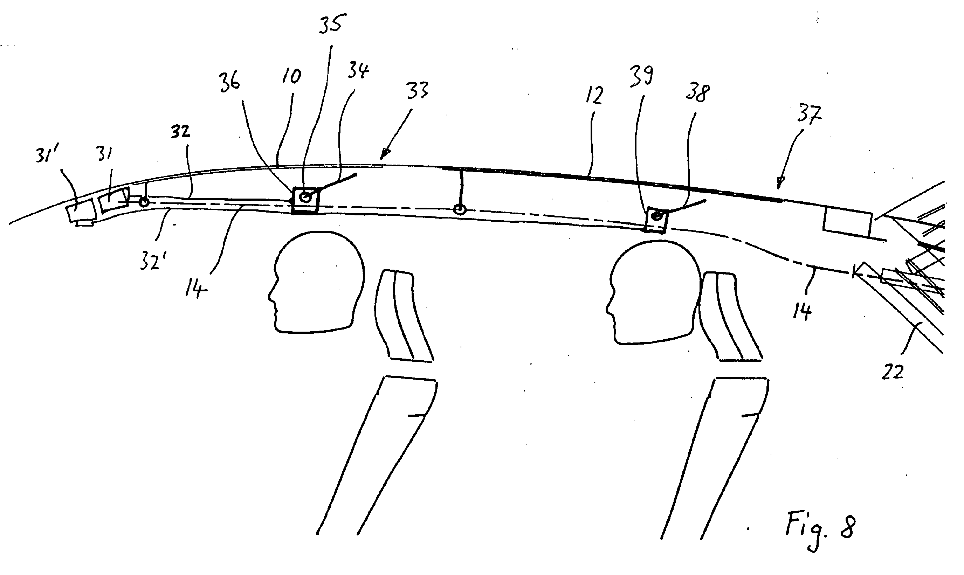

Der vordere Deckel 10 ist aus der gezeigten Schließstellung mittels eines Antriebs, der einen Antriebsmotor 31 und ein Antriebskabel 32 umfaßt (siehe Fig. 8), nach hinten unter den hinteren Deckel 12 verschiebbar (diese hintere Deckelstellung ist in Fig. 1 mit unterbrochener Linie und mit Bezugszeichen 10' dargestellt), indem der vordere Deckel 10, beginnend mit der Hinterkante 33, vor Beginn der Verschiebebewegung abgesenkt wird, was beispielsweise mittels eines jeweiligen Kulissenelementes 34 erfolgen kann, in dessen deckelfester Kulisse ein Führungsteil 35 eines Gleitschlittens 36 geführt ist, der an der Dachführungsschiene 14 verschiebbar gelagert und mit dem Antriebskabel 32 verbunden ist.

Der hintere Deckel 12 ist in ähnlicher Weise wie der vordere Deckel 10, beginnend mit seiner Hinterkante 37 (Figur 8) beispielsweise mittels Kulissenelementen 38 und einem jeweiligen zugeordneten Gleitschlitten 39, absenkbar und kann dann entlang der Dachführungsschiene 14 nach hinten verschoben werden. Dabei bilden der unter den hinteren Deckel 12 geschobene vordere Deckel 10 und der hintere Deckel 12 ein Deckelpaket, welches gemeinsam verschoben und gegebenenfalls abgesenkt wird. Wie bereits angedeutet, kann das Absenken auch dadurch erfolgen, dass die Dachführungsschiene 14 insgesamt abgesenkt wird.

Am hinteren Ende des Fahrzeugdaches ist eine Heckklappe 16 vorgesehen, die an oder nahe ihres oberen Endes um eine in Fahrzeugquerrichtung verlaufende Schwenkachse 18 aus einer Schließstellung mit ihrem unteren Ende nach oben schwenkbar ist. Die Heckklappe 16 umfasst eine Außenabdeckung 20 und seitlich jeweils eine Führungsschiene 22, die eine Führungsbahn für die Deckel 10 und 12 als Deckelpaket bildet. Die Heckklappe 16 ist in Fig. 1 in drei verschiedenen Stellungen mit in der Heckklappe 16 aufgenommenem Deckelpaket dargestellt, nämlich in einer Schließstellung, in welcher die Heckklappe 16 den Heckbereich des Fahrzeugs verschließt, in einer annähernd horizontalen Übergabestellung, in welcher die Deckel 10 und 12 in die Heckklappe 16 hinein bzw. aus dieser heraus geschoben werden können, und in einer Öffnungsstellung, in welcher die Heckklappe 16 mit ihrem hinteren Ende nach oben weist, um ein Beladen eines Heckstauraums 24 des Fahrzeugs zu ermöglichen.

Um die Deckel 10 und 12 zum Freigeben einer Dachöffnung aufnehmen zu können, wird die Heckklappe 16 aus der Schließstellung in die Übergabeposition gebracht, in welcher die Deckel 10 und 12 als Deckelpaket in die Heckklappe 16 geschoben werden und in dieser abgelegt werden. Danach kann die Heckklappe 16 wieder geschlossen werden oder zum Be- bzw. Entladen des Stauraums 24 in die Öffnungsstellung gebracht werden. Die Betätigung der Heckklappe 16 kann manuell oder mittels eines Antriebs erfolgen, wobei in ersterem Fall in der Übergabeposition eine Zwischenarretierung der Heckklappe 16 vorgesehen sein kann.

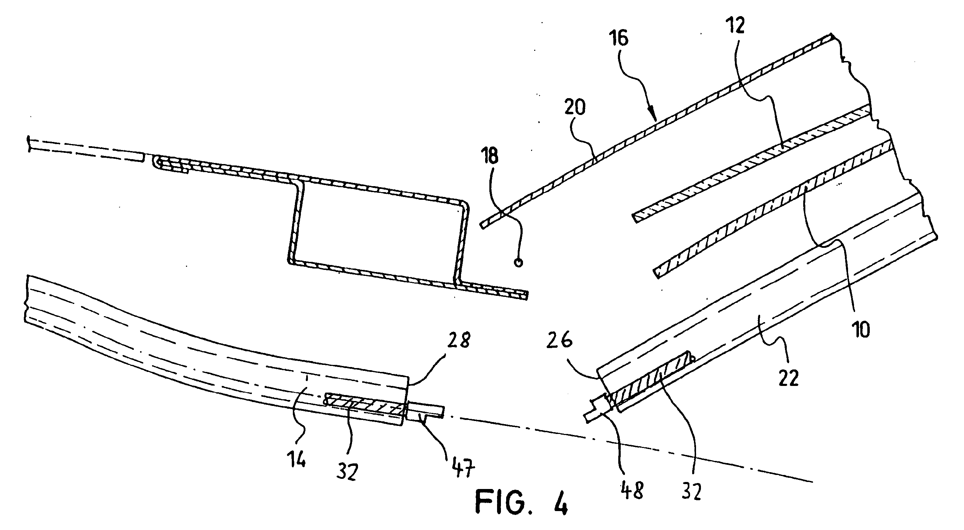

Das Verschieben bzw. Verstellen der Deckel 10 und 12 kann in üblicher Weise mittels der drucksteifen Antriebskabel 32, 32' erfolgen (Figur 8) die von einem oder zwei Elektromotoren 31, 31' angetrieben sind. Dabei kann für jeden Deckel 10 bzw. 12 ein eigener Elektromotor oder ein gemeinsamer Elektromotor vorgesehen sein. Die Antriebskabel 32, 32' sind zweckmäßigerweise so ausgebildet, dass sie mittels einer Kupplung unterbrochen werden können, wenn sich die Deckel 10, 12 in der Heckklappe 16 befinden. Eine derartige Kupplung mit zwei Kupplungsteilen 47 und 48 ist beispielhaft in Fig. 4 dargestellt. Der Elektromotor bzw. die Elektromotoren für den Antrieb der Deckel ist bzw. sind vorzugsweise an dem karosseriefesten Rahmen für die Dachführungsschienen 14 angebracht.

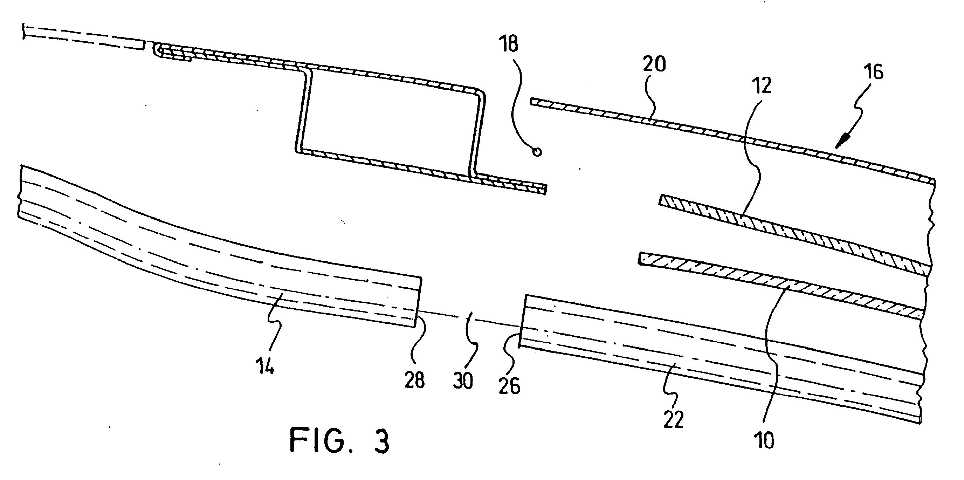

Die Führungsschiene 22 der Heckklappe 16 ist bei dem Ausführungsbeispiel gemäß Fig. 1 bis 4 bezüglich der Heckklappe 16 feststehend ausgebildet. Da das obere Ende der Führungsschiene 22 im allgemeinen nicht mit der Schwenkachse 18 der Heckklappe 16 zusammenfällt, ergibt sich bei dieser Ausführungsform in der Regel in der Übergabeposition der Heckklappe 16 zwischen dem oberen Ende 26 der Führungsschiene 22 der Heckklappe 16 und dem hinteren Ende 28 der karosseriefesten Dachführungsschiene 14 ein Spalt 30 (siehe Fig. 3).

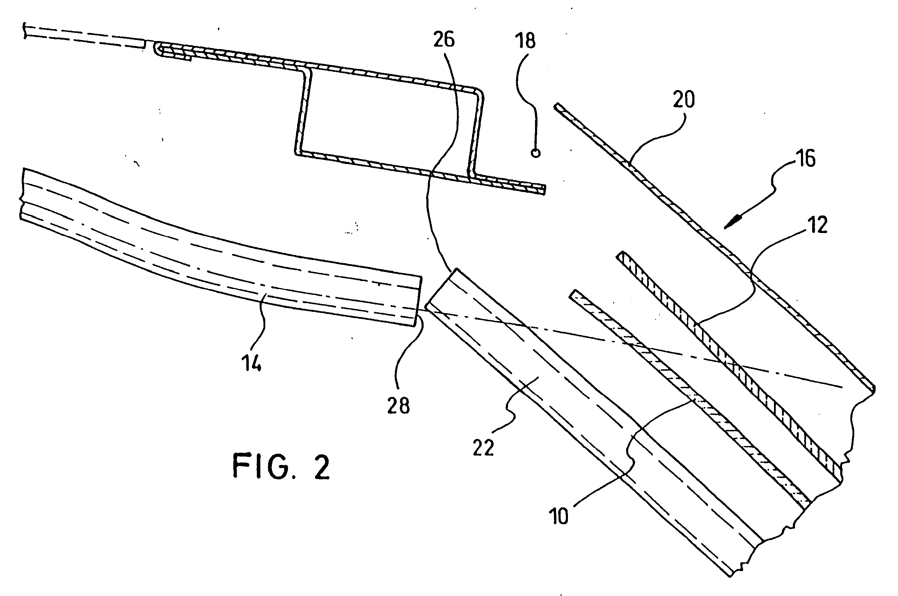

Die Figuren 2 bis 4 zeigen den in Fig. 1 mit einem Kreis II umgebenen Übergangsbereich zwischen dem Fahrzeugdach und der Heckklappe 16 in vergrößerter Darstellung, wobei jeweils die Schließstellung, die Übergabestellung und die Öffnungsstellung der Heckklappe 16 dargestellt ist.

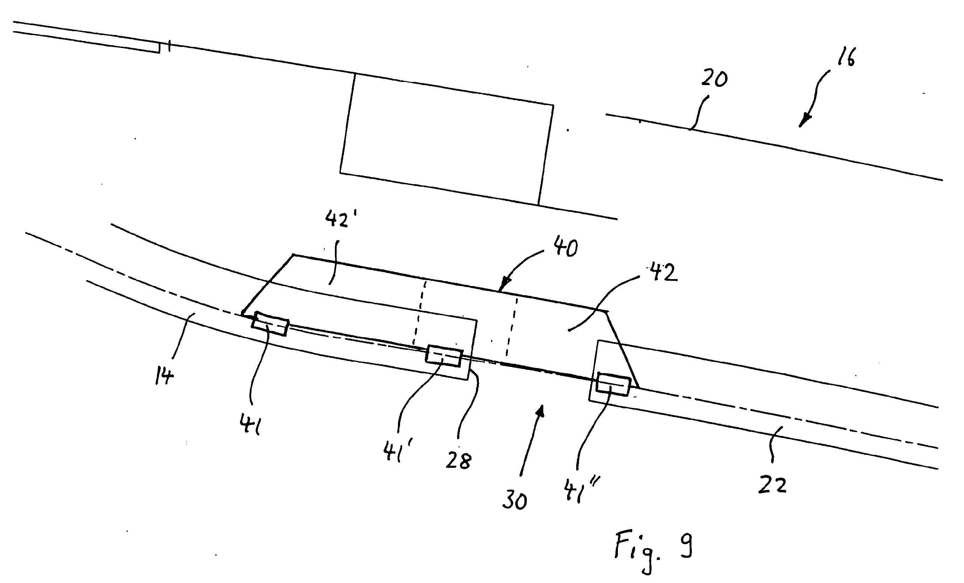

Bei der in Fig. 3 dargestellten Übergabestellung ist es erforderlich, den Spalt 30 zwischen dem Ende 28 der Dachführungsschiene 14 und dem Ende 26 der Führungsschiene 22 zu überbrücken. Dies kann dadurch erfolgen, dass an der Dachführungsschiene 14 ein Gleitschlitten 40 gelagert ist, der drei Gleiter 41, 41' und 41" aufweist, von denen in der in Fig. 9 dargestellten Stellung des Gleitschlittens 40, in der dieser den Spalt 30 überbrückt, zwei Gleiter 41 und 41' den Gleitschlitten 40 noch an der Dachführungsschiene 14 sicher führen, während der dritte Gleiter 41", der an einem als hinterer Ausleger 42 bezeichneten hinteren Abschnitt des Gleitschlittens 40 angeordnet ist, schon an der Führungsschiene 22 gelagert ist. Beim Weiterverschieben des Gleitschlittens 40 gelangt der mittlere Gleiter 41' an die Führungsschiene 22, so daß der Gleitschlitten 40 durch doppelte Lagerung mittels der Gleiter 41' und 41" an der Führungsschiene 22 sicher gelagert ist, während zunächst noch der vordere Gleiter 41, der an einem als vorderer Ausleger 42' bezeichneten vorderen Abschnitt des Gleitschlittens 40 angeordnet ist, an der Dachführungsschiene 14 gelagert ist.

Alternativ können die Gleitelemente, mittels welcher die Deckel 10 und 12 in der Dachführungsschiene 14 geführt sind, so dimensioniert sein, dass sie über den Spalt 30 in die Führungsschiene 22 der Heckklappe 16 gleiten können.

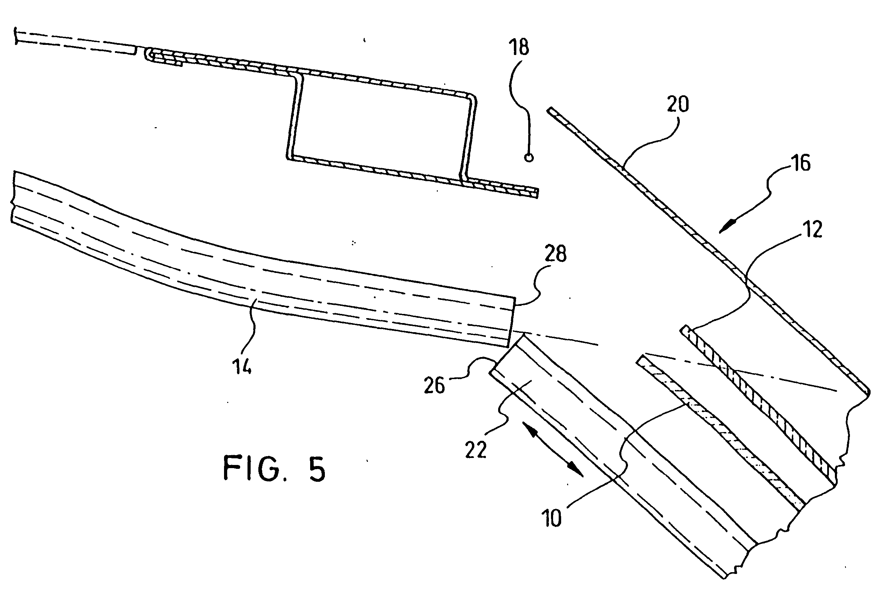

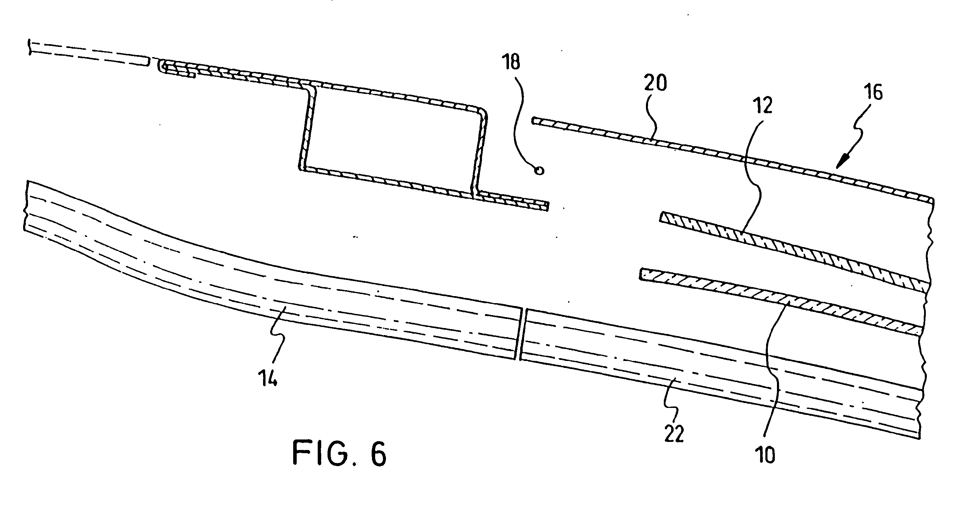

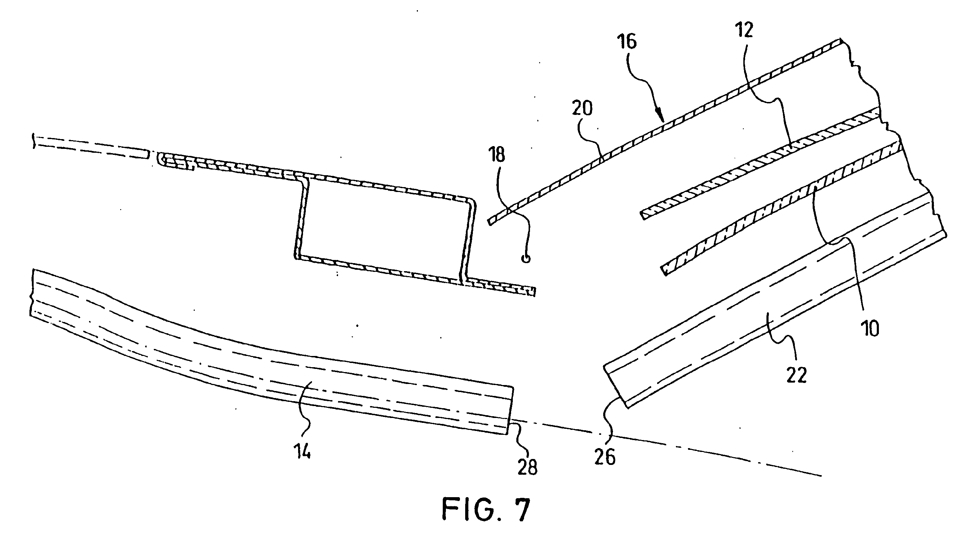

In alternativer Ausgestaltung kann das Problem eines aufgrund der Schwenkgeometrie auftretenden Spalts zwischen den Führungsschienen 14 und 22 dadurch gelöst werden (siehe Fig. 5 bis 7), dass die Führungsschiene 22 der Heckklappe 16 bezüglich der Heckklappe 16 in Längsrichtung, d. h. in Verschieberichtung der Deckel 10 und 12, verschiebbar ausgeführt ist, wie dies in Fig. 5 mittels Doppelpfeil angedeutet ist. Der Antrieb der verschiebbaren Führungsschiene 22 der Heckklappe 16 kann dabei beispielsweise mittels einer Feder, welche die verschiebbare Führungsschiene 22 in Richtung der Dachführungsschiene 14 vorspannt, oder mittels eines Hebelmechanismus, der von der Schwenkbewegung der Heckklappe 16 gesteuert ist, erfolgen, um das Ende 26 der verschiebbaren Führungsschiene 22 in der Übergabestellung der Heckklappe 16 zur Anlage an das hintere Ende 28 der Dachführungsschiene 14 zu bringen.

Ferner kann die verschiebbare Führungsschiene 22 so ausgebildet sein, dass sie durch einen entsprechenden Mechanismus bezüglich der Dachführungsschiene 14 in der Übergabestellung der Heckklappe 16 zentriert wird, um eine exakt fluchtende Ausrichtung der Führungsschienen 14 und 22 in dieser Stellung zu erzielen.

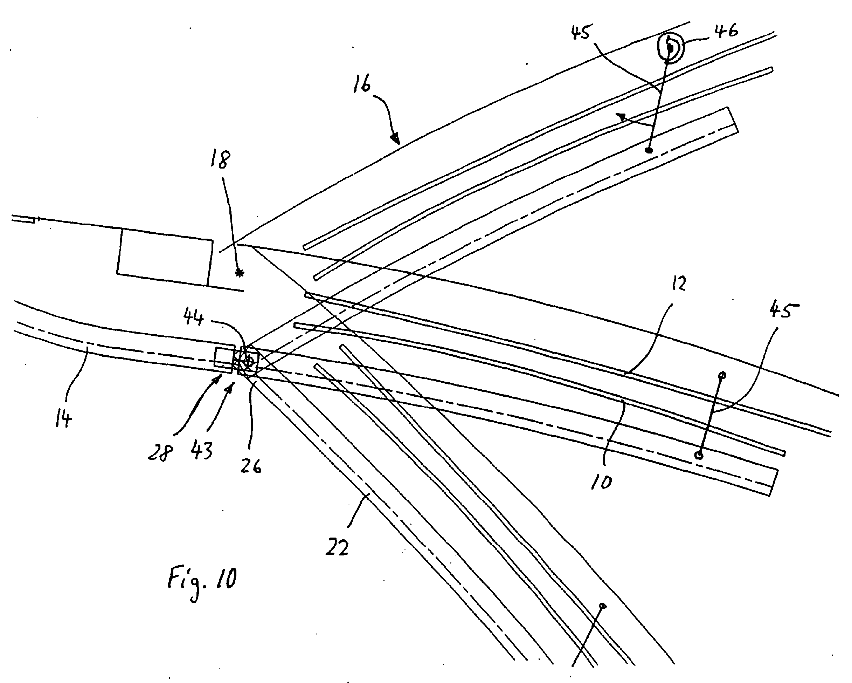

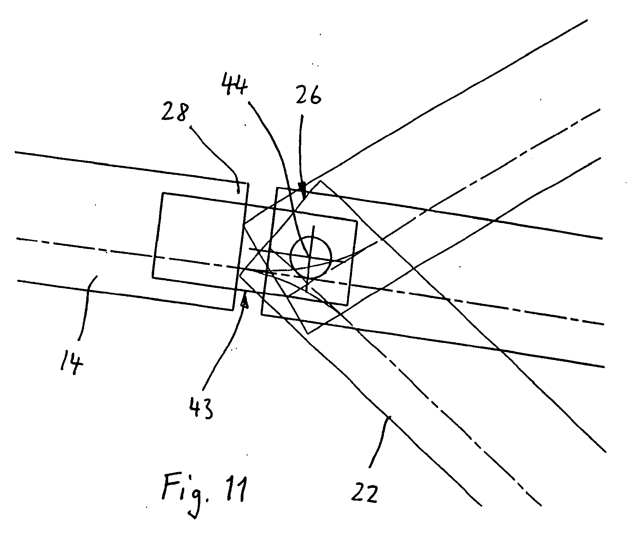

Die Fig. 10 und 11 zeigen ein Gelenk 43, das das Vorderende 26 der Führungsschienen 22 der Heckklappe 16 um eine feste Schwenkachse 44 unmittelbar an dem Hinterende 28 der Dachführungsschiene 14 hält, wenn die Heckklappe 16 verschwenkt wird. Zum Ausgleich der Verschiebung der Führungsschiene 22 relativ zur Heckklappe 16 aufgrund der unterschiedlichen Schwenkachsen 44 bzw. 18 ist ein Hebelmechanismus mit zumindest einem Schwenkhebel 45 vorgesehen (Fig. 10 zeigt die drei Schwenkstellungen der Heckklappe 16 gemäß Fig. 1), der die Führungsschiene 22 mit der Heckklappe 16 bewegbar verbindet und die Ausgleichsbewegung ermöglicht.

Der Schwenkhebel 45 kann auch Teil eines Hebelmechanismus sein, der bei einer Lagerung der Führungsschiene 22 ohne dieses Gelenk 43 die Führungsschiene 22 beim Verschwenken der Heckklappe 16 gegen das Hinterende 28 der vorderen Dachführungsschiene 14 bewegt, z. B. durch Unterstützung einer Feder 46, z. B. einer Drehfeder (siehe beispielhafte Darstellung in der oberen Schwenkstellung der Heckklappe 16 in Fig. 10), die den Schwenkhebel 45 in entsprechender Richtung (siehe Pfeil) vorspannt.

Die Führungsschienen 14 und 22 sind bei allen Ausführungsformen vorzugsweise als Aluminium-Strangpressprofile gebildet.

Die vorliegende Erfindung erlaubt es, auch große Deckel mittels einer einfachen Mechanik in einem Fahrzeugbereich abzulegen, in welchem die abgelegten Dekkel weder für eine optische Beeinträchtigung noch für eine Stauraumverringerung sorgen.

### Bezugszeichenliste

- 10: vorderer Deckel
- 12: hinterer Deckel
- 14: Dachführungsschiene
- 16: Heckklappe
- 18: Schwenkachse
- 20: Abdeckung
- 22: Führungsschiene
- 24: Heckstauraum
- 26: oberes Ende
- 28: hinteres Ende
- 30: Spalt
- 31: Antriebsmotor
- 32: Antriebskabel
- 33: Hinterkante
- 34: Kulissenelement
- 35: Führungsteil
- 36: Gleitschlitten
- 37: Hinterkante
- 38: Kulissenelement
- 39: Gleitschlitten
- 40: Gleitschlitten
- 41: Gleiter
- 42: Ausleger
- 43: Gelenk
- 44: Schwenkachse
- 45: Schwenkhebel
- 46: Feder
- 47: Kupplungsteil
- 48: Kupplungsteil

## Patentansprüche

1. Öffnungsfähiges Fahrzeugdach mit mindestens einem Deckel (10, 12), der aus einer Schließstellung, in welcher er eine Dachöffnung verschließt, entlang einer Dachführungsbahn (14) nach hinten in eine Ablagestellung in der Fahrzeugheckklappe (16) verschiebbar ist,
wobei die Heckklappe (16) eine Führungsbahn (22) für den bzw. die Dekkel (10, 12) aufweist und an oder nahe ihres oberen Endes um eine in Fahrzeugquerrichtung verlaufende Achse (18) schwenkbar an der Karosserie angelenkt ist, so daß sie zwischen einer Schließstellung und einer Öffnungsstellung verschwenkbar ist,
**dadurch gekennzeichnet, dass** die Führungsbahnen (14, 22) und die Heckklappe (16) so ausgebildet sind, dass die Übergabe des Deckels bzw. der Deckel (10, 12) an die Heckklappe (16) in einer Übergabestellung der Heckklappe (16) stattfindet, welche zwischen der Schließstellung und der Öffnungsstellung der Heckklappe (16) liegt.

2. Fahrzeugdach nach Anspruch 1, **dadurch gekennzeichnet, dass** die Heckklappe (16) in der Übergabestellung annähernd horizontal angeordnet ist.

3. Fahrzeugdach nach Anspruch 1 oder 2, **dadurch gekennzeichnet, dass** die Führungsbahn (22) der Heckklappe (16) bezüglich der Heckklappe (16) feststehend ist.

4. Fahrzeugdach nach Anspruch 3, **dadurch gekennzeichnet, dass** in der Übergabestellung der Heckklappe (16) zwischen dem vorderen Ende (26) der Führungsbahn (22) der Heckklappe (16) und dem hinteren Ende (28) der Dachführungsbahn (14) ein Spalt (30) besteht, der von einem in der Dachführungsbahn (14) oder in der Führungsbahn der Heckklappe (16) geführten Schlitten (40) mit Ausleger (42) überbrückt wird.

5. Fahrzeugdach nach Anspruch 1 oder 2, **dadurch gekennzeichnet, dass** die Führungsbahn (22) der Heckklappe (16) bezüglich der Heckklappe (16) in Längsrichtung der Führungsbahn (22) verschiebbar ist, um in der Übergabestellung der Heckklappe (16) mit ihrem oberen Ende (26) an dem hinteren Ende (28) der Dachführungsbahn (14) anzuliegen.

6. Fahrzeugdach nach Anspruch 5, **dadurch gekennzeichnet, dass** die Führungsbahn (22) der Heckklappe (16) mit einer Federvorspannung in Richtung des hinteren Endes (28) der Dachführungsbahn (14) beaufschlagt ist.

7. Fahrzeugdach nach Anspruch 5, **dadurch gekennzeichnet, dass** ein durch die Schwenkbewegung der Heckklappe (16) gesteuerter Hebelmechanismus (45) vorgesehen ist, der die Führungsbahn (22) der Heckklappe (16) derart verschiebt, dass sie in der Übergabestellung der Heckklappe (16) mit ihrem oberen Ende (26) an dem hinteren Ende (28) der Dachführungsbahn (14) anliegt.

8. Fahrzeugdach nach Anspruch 5 bis 7, **dadurch gekennzeichnet, dass** ein Mechanismus (43) vorgesehen ist, um die Führungsbahn (22) der Heckklappe (16) bezüglich der Dachführungsbahn (14) zu zentrieren.

9. Fahrzeugdach nach einem der vorhergehenden Ansprüche, **dadurch gekennzeichnet, dass** zwei in Schließstellung in Fahrzeuglängsrichtung hintereinander angeordnete Deckel (10, 12) vorgesehen sind, wobei der vordere Deckel (10) in einer Dachführungsbahn (14) unter den hinteren Dekkel (12) schiebbar ist, um ein Deckelpaket zu bilden, welches in die Heckklappe (16) verschiebbar ist.

10. Fahrzeugdach nach Anspruch 9, **dadurch gekennzeichnet, dass** für den vorderen Deckel (10) und den hinteren Deckel (12) eine gemeinsame Dachführungsbahn (14) vorgesehen ist.

11. Fahrzeugdach nach Anspruch 9 oder 10, **dadurch gekennzeichnet, dass** der vordere (10) und der hintere Deckel (12) mittels Kulissenelementen (34 bzw. 38) absenkbar sind.

12. Fahrzeugdach nach Anspruch 9 bis 11, **dadurch gekennzeichnet, dass** die Deckel (10, 12) über drucksteife Antriebskabel (32, 32') angetrieben werden, welche von mindestens einem karosseriefest angebrachten Antriebsmotor (31) angetrieben werden und mittels einer Kupplung (47, 48) unterbrechbar sind, um das Abschwenken der Heckklappe (16) mit den aufgenommenen Deckeln in die Schließstellung zu ermöglichen.

13. Fahrzeugdach nach Anspruch 12, **dadurch gekennzeichnet, dass** jeder Deckel (10, 12) von einen separaten Antriebsmotor (31,31') angetrieben ist.

14. Fahrzeugdach nach einem der vorhergehenden Ansprüche, **dadurch gekennzeichnet, dass** die Führungsbahnen (14, 22) als Schienen, vorzugsweise in Form von Aluminium-Strangpressprofilen, gebildet sind.

15. Fahrzeugdach nach einem der vorhergehenden Ansprüche, **dadurch gekennzeichnet, dass** die Dachführungsbahn (14) karosseriefest ist.

## Claims

1. Openable vehicle roof having at least one panel (10, 12) which can be displaced rearwards along a roof guide track (14) from a closed position, in which it closes a roof opening, into a stored position in the vehicle tailgate (16),
the tailgate (16) having a guide track (22) for the panel or panels (10, 12) and, at or close to its upper end, being attached to the body such that it can be pivoted about an axis (18) running in the vehicle transverse direction, so that it can be pivoted between a closed position and an open position,
**characterized in that** the guide tracks (14, 22) and the tailgate (16) are constructed in such a way that the transfer of the panel or panels (10, 12) to the tailgate (16) takes place in a transfer position of the tailgate (16), which is located between the closed position and the open position of the tailgate (16).

2. Vehicle roof according to Claim 1, **characterized in that** the tailgate (16) is arranged approximately horizontally when in the transfer position.

3. Vehicle roof according to Claim 1 or 2, **characterized in that** the guide track (22) of the tailgate (16) is stationary with respect to the tailgate (16).

4. Vehicle roof according to Claim 3, **characterized in that**, in the transfer position of the tailgate (16), a gap (30) exists between the front end (26) of the guide track (22) of the tailgate (16) and the rear end (28) of the roof guide track (14), which gap is bridged by a carriage (40) with extension (42) guided in the roof guide track (14) or in the guide track of the tailgate (16).

5. Vehicle roof according to Claim 1 or 2, **characterized in that** the guide track (22) of the tailgate (16) can be displaced with respect to the tailgate (16) in the longitudinal direction of the guide track (22), in order, in the transfer position of the tailgate (16), to rest with its upper end (26) on the rear end (28) of the roof guide track (14).

6. Vehicle roof according to Claim 5, **characterized in that** the guide track (22) of the tailgate (16) is acted on by a spring prestress in the direction of the rear end (28) of the roof guide track (14).

7. Vehicle roof according to Claim 5, **characterized in that** a lever mechanism (45) controlled by the pivoting movement of the tailgate (16) is provided, which displaces the guide track (22) of the tailgate (16) in such a way that, in the transfer position of the tailgate (16), the said guide track (22) rests with its upper end (26) on the rear end (28) of the roof guide track (14).

8. Vehicle roof according to Claim 5 to 7, **characterized in that** a mechanism (43) is provided in order to centre the guide track (22) of the tailgate (16) with respect to the roof guide track (14).

9. Vehicle roof according to one of the preceding claims, **characterized in that** two panels (10, 12) are provided which are arranged one after the other in the vehicle longitudinal direction when in the closed position, it being possible for the front panel (10) to be pushed under the rear panel (12) in a roof guide track (14) in order to form a panel pack which can be displaced into the tailgate (16).

10. Vehicle roof according to Claim 9, **characterized in that** a common roof guide track (14) is provided for the front panel (10) and the rear panel (12).

11. Vehicle roof according to Claim 9 or 10, **characterized in that** the front (10) and the rear panel (12) can be lowered by means of slotted guide elements (34 and 38).

12. Vehicle roof according to Claim 9 to 11, **characterized in that** the panels (10, 12) are driven via drive cables (32, 32') which are rigid in compression, are driven by at least one drive motor (31) fixed to the body and can be interrupted by means of a coupling (47, 48), in order to permit the pivoting of the tailgate (16) with the accommodated panels into the closed position.

13. Vehicle roof according to Claim 12, **characterized in that** each panel (10, 12) is driven by a separate drive motor (31, 31').

14. Vehicle roof according to one of the preceding claims, **characterized in that** the guide tracks (14, 22) are formed as rails, preferably in the form of extruded aluminium profiles.

15. Vehicle roof according to one of the preceding claims, **characterized in that** the roof guide track (14) is fixed to the body.

## Revendications

1. Toit ouvrant de véhicule, comportant au moins un capot (10, 12) pouvant coulisser vers l'arrière le long d'une piste de guidage (14) solidaire du toit, depuis une position de fermeture dans laquelle il obture une ouverture de pavillon, jusqu'à une position de remisage située dans le hayon (16) du véhicule,
ledit hayon (16) présentant une piste de guidage (22) destinée au(x) capot(s) (10, 12) et étant articulé sur la carrosserie, à son extrémité supérieure ou à proximité de cette dernière, avec faculté de pivotement autour d'un axe (18) s'étendant dans le sens transversal du véhicule, de telle sorte qu'il puisse pivoter entre une position de fermeture et une position d'ouverture,
**caractérisé par le fait que** les pistes de guidage (14, 22) et le hayon (16) sont réalisés de façon telle que le transfert respectif du ou des capot(s) (10, 12), audit hayon (16), ait lieu dans une position de transfert dudit hayon (16) qui est située entre la position de fermeture et la position d'ouverture dudit hayon (16).

2. Toit de véhicule, selon la revendication 1, **caractérisé par le fait que** le hayon (16) est agencé à peu près horizontalement dans la position de transfert.

3. Toit de véhicule, selon la revendication 1 ou 2, **caractérisé par le fait que** la piste de guidage (22) du hayon (16) est fixe vis-à-vis dudit hayon (16).

4. Toit de véhicule, selon la revendication 3, **caractérisé par le fait qu'**un interstice (30), réservé entre l'extrémité antérieure (26) de la piste de guidage (22) du hayon (16) et l'extrémité postérieure (28) de la piste de guidage (14) solidaire du toit, lorsque ledit hayon (16) occupe la position de transfert, est comblé par une pièce coulissante (40) munie d'une région (42) en porte-à-faux et guidée dans ladite piste de guidage (14) solidaire du toit, ou dans ladite piste de guidage dudit hayon (16).

5. Toit de véhicule, selon la revendication 1 ou 2, **caractérisé par le fait que** la piste de guidage (22) du hayon (16) peut coulisser vis-à-vis dudit hayon (16), dans la direction longitudinale de ladite piste de guidage (22), de manière à reposer par son extrémité supérieure (26) sur l'extrémité postérieure (28) de la piste de guidage (14) solidaire du toit, lorsque ledit hayon (16) occupe la position de transfert.

6. Toit de véhicule, selon la revendication 5, **caractérisé par le fait que** la piste de guidage (22) du hayon (16) est sollicitée, par une précontrainte élastique, dans la direction de l'extrémité postérieure (28) de la piste de guidage (14) solidaire du toit.

7. Toit de véhicule, selon la revendication 5, **caractérisé par** la présence d'un mécanisme à levier (45) qui est commandé par le mouvement pivotant du hayon (16) et qui fait coulisser la piste de guidage (22) dudit hayon (16) de façon telle que, dans la position de transfert dudit hayon (16), ladite piste repose par son extrémité supérieure (26) sur l'extrémité postérieure (28) de la piste de guidage (14) solidaire du toit.

8. Toit de véhicule, selon les revendications 5 à 7, **caractérisé par le fait qu'**un mécanisme (43) est prévu pour centrer la piste de guidage (22) du hayon (16) vis-à-vis de la piste de guidage (14) solidaire du toit.

9. Toit de véhicule, selon l'une des revendications précédentes, **caractérisé par** la présence de deux capots (10, 12) agencés en succession dans la direction longitudinale du véhicule, en position fermée, le capot antérieur (10) pouvant glisser au-dessous du capot postérieur (12), dans une piste de guidage (14) solidaire du toit, en vue de former un regroupement de capots pouvant coulisser jusque dans le hayon (16).

10. Toit de véhicule, selon la revendication 9, **caractérisé par le fait qu'**une piste commune de guidage (14), solidaire du toit, est prévue pour le capot antérieur (10) et le capot postérieur (12).

11. Toit de véhicule, selon la revendication 9 ou 10, **caractérisé par le fait que** les capots antérieur (10) et postérieur (12) peuvent être abaissés au moyen d'éléments coulissants (34, respectivement 38).

12. Toit de véhicule, selon les revendications 9 à 11, **caractérisé par le fait que** les capots (10, 12) sont menés par l'intermédiaire de câbles d'entraînement (32, 32') rigides à la pression, qui peuvent être entraînés par au moins un moteur d'entraînement (31) faisant corps avec la carrosserie et peuvent être interrompus, au moyen d'un accouplement (47, 48), afin de permettre le pivotement descendant du hayon (16) jusqu'à la position fermée, conjointement aux capots prisonniers.

13. Toit de véhicule, selon la revendication 12, **caractérisé par le fait que** chaque capot (10, 12) est mené par un moteur d'entraînement (31,31') distinct.

14. Toit de véhicule, selon l'une des revendications précédentes, **caractérisé par le fait que** les pistes de guidage (14, 22) se présentent comme des glissières, de préférence sous la forme de profilés venus d'extrusion en aluminium.

15. Toit de véhicule, selon l'une des revendications précédentes, **caractérisé par le fait que** la piste de guidage (14), solidaire du toit, fait corps avec la carrosserie.
